# EUROPEAN PATENT APPLICATION

(11) **EP 4 209 901 A1**
(43) Date of publication of application: **12.07.2023**
(21) Application number: 21874304.5
(22) Date of filing: 22.09.2021
(51) Int. Cl.: G06F 9/50

(54) **MULTI-TASK DEPLOYMENT METHOD AND APPARATUS**

(30) Priority: 29.09.2020 CN 202011047346
(71) Applicant: Huawei Technologies Co., Ltd., Shenzhen, Guangdong 518129 (CN)
(72) Inventor: ZHAO, Junxu, Shenzhen, Guangdong 518129 (CN)
(74) Representative: Maiwald GmbH
(86) International application number: PCT/CN2021/119556
(87) International publication number: WO 2022/068643

(57) **Abstract**

This application provides a multi-task deployment method. The method includes: obtaining first information of a target platform, where the first information indicates an attribute of the target platform; obtaining second information of a plurality of to-be-deployed tasks, where the second information indicates a requirement for the plurality of tasks; performing formal description on the first information and the second information based on a formal language, to obtain a formal model; performing formal analysis based on the formal model by using a state machine, to generate a deployment policy for the plurality of tasks; and deploying the plurality of tasks according to the deployment policy. Efficiency of multi-task deployment can be improved according to the method in embodiments of this application.

## Description

This application claims priority to Chinese Patent Application No. 202011047346.9, filed with the China National Intellectual Property Administration on September 29, 2020 and entitled "MULTI-TASK DEPLOYMENT METHOD AND APPARATUS", which is incorporated herein by reference in its entirety.

### TECHNICAL FIELD

This application relates to the field of computer application technologies, and more specifically, to a multi-task deployment method and apparatus.

### BACKGROUND

With rapid development of self-driving technologies, requirements for sensing precision and robustness of a sensor are increasingly high, and computing power and resources required by the sensor are also continuously increased. In addition, a high-performance system on a chip (system on a chip, SoC) used for self-driving gradually evolves from a high-performance single-core system to a multi-core system. Whether processing resources of the multi-core system are fully used to deploy a plurality of real-time tasks of a sensor system directly affects precision and robustness of a sensor. However, a multi-task scenario of the sensor system is usually complex, it is difficult to quickly determine a proper deployment policy, and multi-task deployment has low efficiency.

Therefore, how to improve efficiency of multi-task deployment becomes a technical problem that urgently needs to be resolved.

### SUMMARY

This application provides a multi-task deployment method and apparatus, to improve efficiency of multi-task deployment.

According to a first aspect, a multi-task deployment method is provided, where the method includes:
obtaining first information of a target platform, where the first information indicates an attribute of the target platform; obtaining second information of a plurality of to-be-deployed tasks, where the second information indicates a requirement for the plurality of tasks; performing formal description on the first information and the second information based on a formal language, to obtain a formal model; performing formal analysis based on the formal model by using a state machine, to generate a deployment policy for the plurality of tasks; and deploying the plurality of tasks according to the deployment policy.

In an embodiment of this application, formal description is performed on the attribute of the target platform and the requirement for the plurality of tasks, to obtain the formal model, and formal analysis is performed based on the formal model by using the state machine, to generate the deployment policy for the plurality of tasks, and quickly provide the proper deployment policy without being affected by an actual running environment, so that the efficiency of multi-task deployment can be improved.

With reference to the first aspect, in some implementations of the first aspect, the target platform includes a plurality of nodes, the first information includes information indicating a quantity of the nodes on the target platform, a type of each of the plurality of nodes, a capability of each node, a power consumption mode of the target platform, and a trigger condition for each power consumption mode, and the second information includes information indicating a quantity of the plurality of tasks, a dependency relationship between the plurality of tasks, a time constraint for each of the plurality of tasks, and a resource required for executing each task.

With reference to the first aspect, in some implementations of the first aspect, the performing formal analysis based on the formal model by using a state machine, to generate a deployment policy for the plurality of tasks includes: performing formal analysis based on the formal model by using the state machine, to determine whether a conflict occurs in the deployment policy for the plurality of tasks; and generating the deployment policy for the plurality of tasks when the conflict does not occur in the deployment policy for the plurality of tasks.

With reference to the first aspect, in some implementations of the first aspect, the performing formal analysis based on the formal model by using a state machine, to generate a deployment policy for the plurality of tasks includes: performing formal analysis based on the formal model by using the state machine, to determine whether a conflict occurs in the deployment policy for the plurality of tasks; determining conflict information of the deployment policy for the plurality of tasks when the conflict occurs in the deployment policy for the plurality of tasks; and adjusting the formal model based on the conflict information.

With reference to the first aspect, in some implementations of the first aspect, the performing formal analysis based on the formal model by using a state machine, to generate a deployment policy for the plurality of tasks includes: performing formal analysis based on the formal model by using the state machine, to generate the deployment policy for the plurality of tasks and resource utilization information of the target platform.

With reference to the first aspect, in some implementations of the first aspect, the method further includes: adding a task to the deployment policy based on the resource utilization information; and updating the resource utilization information based on the added task.

With reference to the first aspect, in some implementations of the first aspect, the state machine includes a platform state machine and a task state machine, the platform state machine includes the power consumption mode of the platform, a condition for switching between the power consumption modes, and a resource constraint for each power consumption mode, and the task state machine includes a task state and a condition for switching between task states.

According to a second aspect, a multi-task deployment apparatus is provided, including:
a first obtaining unit, configured to obtain first information of a target platform, where the first information indicates an attribute of the target platform; a second obtaining unit, configured to obtain second information of a plurality of to-be-deployed tasks, where the second information indicates a requirement for the plurality of tasks; a formal description unit, configured to perform formal description on the first information and the second information based on a formal language, to obtain a formal model; a formal analysis unit, configured to perform formal analysis based on the formal model by using a state machine, to generate a deployment policy for the plurality of tasks; and a deployment unit, configured to deploy the plurality of tasks according to the deployment policy.

In an embodiment of this application, formal description is performed on the attribute of the target platform and the requirement for the plurality of tasks, to obtain the formal model, and formal analysis is performed based on the formal model by using the state machine, to generate the deployment policy for the plurality of tasks, and quickly provide the proper deployment policy without being affected by an actual running environment, so that the efficiency of multi-task deployment can be improved.

With reference to the second aspect, in some implementations of the second aspect, the target platform includes a plurality of nodes, the first information includes information indicating a quantity of the nodes on the target platform, a type of each of the plurality of nodes, a capability of each node, the power consumption mode of the target platform, and a trigger condition for each power consumption mode, and the second information includes information indicating a quantity of the plurality of tasks, a dependency relationship between the plurality of tasks, a time constraint for each of the plurality of tasks, and a resource required for executing each task.

With reference to the second aspect, in some implementations of the second aspect, the formal analysis unit is specifically configured to: perform formal analysis based on the formal model by using the state machine, to determine whether a conflict occurs in the deployment policy for the plurality of tasks; and generate the deployment policy for the plurality of tasks when the conflict does not occur in the deployment policy for the plurality of tasks.

With reference to the second aspect, in some implementations of the second aspect, the formal analysis unit is specifically configured to: perform formal analysis based on the formal model by using the state machine, to determine whether a conflict occurs in the deployment policy for the plurality of tasks; determine conflict information of the deployment policy for the plurality of tasks when the conflict occurs in the deployment policy for the plurality of tasks; and adjust the formal model based on the conflict information.

With reference to the second aspect, in some implementations of the second aspect, the formal analysis unit is specifically configured to: perform formal analysis based on the formal model by using the state machine, to generate the deployment policy for the plurality of tasks and resource utilization information of the target platform.

With reference to the second aspect, in some implementations of the second aspect, the apparatus further includes an updating unit, configured to: add a task to the deployment policy based on the resource utilization information; and update the resource utilization information based on the added task.

With reference to the second aspect, in some implementations of the second aspect, the state machine includes a platform state machine and a task state machine, the platform state machine includes the power consumption mode of the platform, a condition for switching between the power consumption modes, and a resource constraint for each power consumption mode, and the task state machine includes a task state and a condition for switching between task states.

According to a third aspect, a multi-task deployment apparatus is provided, where the apparatus includes a storage medium and a central processing unit, the storage medium may be a non-volatile storage medium, the storage medium stores a computer executable program, and the central processing unit is connected to the non-volatile storage medium, and executes the computer executable program to implement the method according to any one of the first aspect or the possible implementations of the first aspect.

According to a fourth aspect, a chip is provided, where the chip includes a processor and a data interface, and the processor reads, through the data interface, instructions stored in a memory, to perform the method according to any one of the first aspect or the possible implementations of the first aspect.

Optionally, in an implementation, the chip may further include the memory, the memory stores instructions, the processor is configured to execute the instructions stored in the memory, and when the instructions are executed, the processor is configured to perform the method according to any one of the first aspect or the possible implementations of the first aspect.

According to a fifth aspect, a computer-readable storage medium is provided, where the computer-readable storage medium is configured to store program code executed by a device, and the program code includes instructions used to perform the method according to any one of the first aspect or the possible implementations of the first aspect.

According to a sixth aspect, a controller is provided, where the controller includes the multi-task deployment apparatus according to the second aspect or the third aspect.

Optionally, in an implementation, the controller may be a self-driving domain control unit (domain control unit, DCU).

According to a seventh aspect, an automobile is provided, where the automobile includes the multi-task deployment apparatus according to the second aspect or the third aspect or the controller according to the sixth aspect.

In an embodiment of this application, formal description is performed on the attribute of the target platform and the requirement for the plurality of tasks, to obtain the formal model, and formal analysis is performed based on the formal model by using the state machine, to generate the deployment policy for the plurality of tasks, and quickly provide the proper deployment policy without being affected by an actual running environment, so that the efficiency of multi-task deployment can be improved.

### BRIEF DESCRIPTION OF DRAWINGS

FIG. 1 is a schematic diagram of a structure of a self-driving vehicle according to an embodiment of this application;
FIG. 2 is a schematic diagram of a structure of a self-driving system according to an embodiment of this application;
FIG. 3 is a schematic diagram of a structure of a system architecture to which an embodiment of this application is applicable;
FIG. 4 is a schematic block diagram of a multi-task deployment method according to an embodiment of this application;
FIG. 5 is a schematic block diagram of a platform state machine according to another embodiment of this application;
FIG. 6 is a schematic block diagram of a task state machine according to another embodiment of this application;
FIG. 7 is a schematic block diagram of a multi-task deployment method according to an embodiment of this application;
FIG. 8 is a schematic block diagram of a multi-task deployment apparatus according to another embodiment of this application; and
FIG. 9 is a schematic block diagram of a multi-task deployment apparatus according to another embodiment of this application.

### DESCRIPTION OF EMBODIMENTS

The following describes technical solutions of this application with reference to the accompanying drawings.

The technical solutions in embodiments of this application may be applied to various scenarios in which a plurality of tasks need to be deployed on a plurality of cores (or processors). For example, the technical solutions in embodiments of this application may be applied to a vehicle, and a plurality of tasks in a sensor system of the vehicle are deployed on a plurality of processors in a controller.

The technical solutions in embodiments of this application may be applied to various vehicles. The vehicle may be specifically an internal combustion locomotive, a smart electric vehicle, or a hybrid vehicle, and alternatively, a vehicle of another power type or the like. This is not limited in embodiments of this application.

The vehicle in embodiments of this application may be a self-driving vehicle. For example, the self-driving vehicle may be configured with a self-driving mode. The self-driving mode may be a fully self-driving mode or a partially self-driving mode. This is not limited in embodiments of this application.

The vehicle in embodiments of this application may be further configured with another driving mode. The another driving mode may refer to one or more of a plurality of driving modes such as a motion mode, an economic mode, a standard mode, a snow mode, and a ramp mode. The self-driving vehicle may switch between the self-driving mode and the plurality of driving modes (of the vehicle driven by a driver). This is not limited in embodiments of this application.

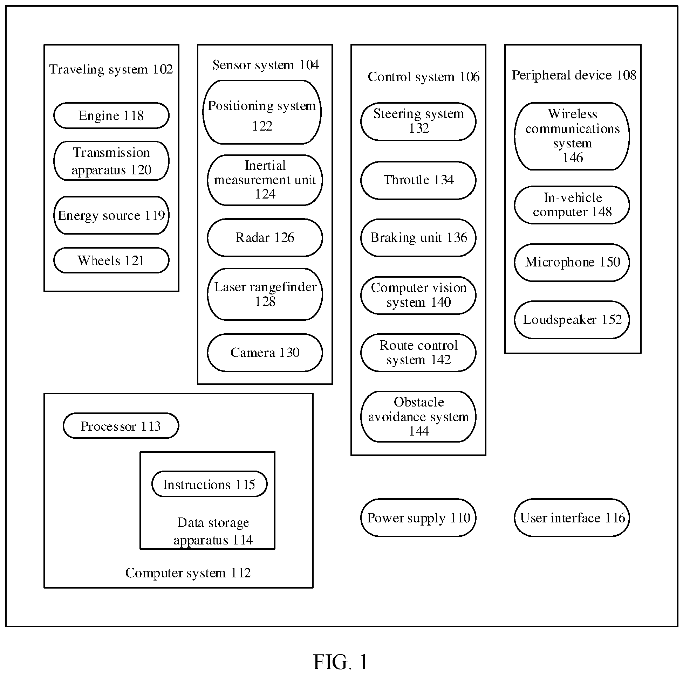

FIG. 1 is a functional block diagram of a vehicle 100 according to an embodiment of this application.

In an embodiment, the vehicle 100 is configured to be in a fully or partially self-driving mode.

For example, the vehicle 100 may be controlled in the self-driving mode, may further determine a current status of the vehicle and an environment around the vehicle by using a manual operation, determine at least one possible behavior of another vehicle in the surrounding environment, and determine a confidence level corresponding to a possibility that the another vehicle performs the possible behavior. The vehicle 100 is controlled based on determined information. When the vehicle 100 is in the self-driving mode, the vehicle 100 may be configured to operate without interacting with a person.

The vehicle 100 may include various subsystems, such as a traveling system 102, a sensor system 104, a control system 106, one or more peripheral devices 108, a power supply 110, a computer system 112, and a user interface 116.

Optionally, the vehicle 100 may include more or fewer subsystems, and each subsystem may include a plurality of elements. Additionally, each subsystem and element of the vehicle 100 may be interconnected in a wired or wireless manner.

The traveling system 102 may include a component that provides power motion for the vehicle 100. In an embodiment, the traveling system 102 may include an engine 118, an energy source 119, a transmission apparatus 120, and wheels/tires 121. The engine 118 may be an internal combustion engine, an electric motor, an air compression engine, or another type of engine combination, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other petroleum-based fuel, propane, other air-compressed fuel, anhydrous alcohol, a solar panel, a battery, or another electricity source. The energy source 119 may also provide energy for another system of the vehicle 100.

The transmission apparatus 120 may transmit the mechanical power from the engine 118 to the wheels 121. The transmission apparatus 120 may include a gearbox, a differential, and a drive shaft.

In an embodiment, the transmission apparatus 120 may further include another device, for example, a clutch. The drive shaft may include one or more shafts that may be coupled to one or more wheels 121.

The sensor system 104 may include several sensors that sense information of the environment around the vehicle 100.

For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor of an internal system of the monitored vehicle 100 (for example, an in-vehicle air quality monitor, a fuel gauge, or an oil thermometer). Sensor data from one or more of these sensors may be used to detect an object and a corresponding characteristic of the object (position, shape, direction, speed, and the like). Such detection and recognition are key functions of the autonomous vehicle 100 to perform a safe operation.

The positioning system 122 may be configured to estimate a geographical location of the vehicle 100. The IMU 124 is configured to sense a location and orientation change of the vehicle 100 based on inertial acceleration. In an embodiment, the IMU 124 may be a combination of an accelerometer and a gyroscope.

The radar 126 may sense an object in the environment around the vehicle 100 by using a radio signal. In some embodiments, in addition to sensing the object, the radar 126 may be further configured to sense a speed and/or a forward direction of the object.

The laser rangefinder 128 may sense, by using a laser, the object in the environment around the vehicle 100. In some embodiments, the laser rangefinder 128 may include one or more laser sources, a laser scanner, one or more detectors, and another system component.

The camera 130 may be configured to capture a plurality of images of the environment around the vehicle 100. The camera 130 may be a static camera or a video camera.

The control system 106 controls an operation of the vehicle 100 and a component of the vehicle 100. The control system 106 may include various elements, including a steering system 132, a throttle 134, a braking unit 136, a sensor fusion algorithm 138, a computer vision system 140, a route control system 142, and an obstacle avoidance system 144.

The steering system 132 may be operated to adjust a forward direction of the vehicle 100. For example, in an embodiment, a steering wheel system may be used.

The throttle 134 is configured to control an operating speed of the engine 118 and further control a speed of the vehicle 100.

The braking unit 136 is configured to control the vehicle 100 to decelerate. The braking unit 136 may slow down the wheels 121 by using friction. In another embodiment, the braking unit 136 may convert kinetic energy of the wheels 121 into an electric current. The braking unit 136 may also slow down a rotational speed of the wheels 121 in another form, to control the speed of the vehicle 100.

The computer vision system 140 may be operated to process and analyze an image captured by the camera 130, in order to recognize the object in and/or a characteristic of the environment around the vehicle 100. The object and/or the characteristic may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to draw a map for the environment, track the object, estimate a speed of the object, and the like.

The route control system 142 is configured to determine a driving route of the vehicle 100. In some embodiments, the route control system 142 may determine the driving route of the vehicle 100 in combination with data of the sensor fusion algorithm 138, the positioning system 122, and one or more predetermined maps.

The obstacle avoidance system 144 is configured to recognize, evaluate, and avoid or otherwise cross over a potential obstacle in the environment around the vehicle 100.

Certainly, in an instance, the control system 106 may additionally or alternatively include a component other than components shown and described. Some of the components shown above may be alternatively reduced.

The vehicle 100 interacts with an external sensor, another vehicle, another computer system, or a user by using the peripheral device 108. The peripheral device 108 may include a wireless communications system 146, an in-vehicle computer 148, a microphone 150, and/or a loudspeaker 152.

In some embodiments, the peripheral device 108 provides a means for a user of the vehicle 100 to interact with the user interface 116. For example, the in-vehicle computer 148 may provide information to the user of the vehicle 100. The user interface 116 may further operate the in-vehicle computer 148 to receive an input from the user. The in-vehicle computer 148 may be operated by using a touchscreen. In another case, the peripheral device 108 may provide a means for the vehicle 100 to communicate with another device located in the vehicle. For example, the microphone 150 may receive an audio frequency (for example, a voice command or another audio input) from the user of the vehicle 100. Similarly, the loudspeaker 152 may output an audio frequency to the user of the vehicle 100.

The wireless communications system 146 may communicate, in a wireless manner, with one or more devices directly or through a communications network. For example, the wireless communications system 146 may use 3G cellular communication such as CDMA, EVDO, and GSM/GPRS, or 4G cellular communication such as LTE. 5G cellular communication may be used alternatively. The wireless communications system 146 may communicate with a wireless local area network (wireless local area network, WLAN) by using Wi-Fi. In some embodiments, the wireless communications system 146 may directly communicate with a device by using an infrared link, Bluetooth, or ZigBee. Other wireless protocols such as various vehicle communications systems may be used for communication. For example, the wireless communications system 146 may include one or more dedicated short range communications (dedicated short range communications, DSRC) devices, which may be used for public and/or private data communication between vehicles or between the vehicle and a roadside station.

The power supply 110 may supply power to various components of the vehicle 100. In an embodiment, the power supply 110 may be a rechargeable lithium-ion or lead-acid battery. One or more battery packs including such battery may be configured as a power supply to provide power to various components of the vehicle 100. In some embodiments, the power supply 110 and the energy source 119 may be implemented together, for example, in some all-electric vehicles.

Some or all functions of the vehicle 100 are controlled by the computer system 112. The computer system 112 may include at least one processor 113, and the processor 113 executes instructions 115 stored in a non-transient computer-readable medium such as a data storage apparatus 114. The computer system 112 may further be a plurality of computing devices that control an individual component or a subsystem of the vehicle 100 in a distributed manner.

The processor 113 may be any conventional processor, such as a commercially available CPU. Alternatively, the processor may be a dedicated device such as an ASIC or another hardware-based processor. Although FIG. 1 functionally displays a processor, a memory, and another element of the computer in a same block, a person of ordinary skill in the art should understand that the processor, the computer, or the memory may actually include a plurality of processors, computers, or memories in a same physical housing. For example, the memory may be a hard disk drive or another storage medium located outside the housing of the computer. Therefore, a reference to the processor or the computer is understood to include a reference to a set of processors, computers, or memories that may or may not operate in parallel. Instead of using a single processor to perform steps described herein, each of some components such as a steering component and a deceleration component may be configured with a respective processor, which performs calculation related to a component-specific function only.

In various aspects described herein, the processor may be located far away from the vehicle and communicate with the vehicle in a wireless manner. In another aspect, some processes described herein are performed by a processor arranged in the vehicle and other processes are performed by a remote processor, including taking necessary steps to perform a single operation.

In some embodiments, the data storage apparatus 114 may include the instructions 115 (for example, program logic), and the instructions 115 may be executed by the processor 113 to perform various functions of the vehicle 100, including functions described above. The data storage apparatus 114 may further include an additional instruction, including an instruction to send data to, receive data from, interact with, and/or control one or more of the traveling system 102, the sensor system 104, the control system 106, and the peripheral device 108.

In addition to the instructions 115, the data storage apparatus 114 may further store data, for example, a road map, route information, a location, a direction, a speed of the vehicle, other such vehicle data, and other information. Such information may be used by the vehicle 100 and the computer system 112 during operation of the vehicle 100 in autonomous, semi-autonomous, and/or manual modes.

The user interface 116 is configured to provide information to or receive information from the user of the vehicle 100. Optionally, the user interface 116 may include one or more input/output devices in a set of the peripheral devices 108, such as the wireless communications system 146, the in-vehicle computer 148, the microphone 150, and the loudspeaker 152.

The computer system 112 may control a function of the vehicle 100 based on inputs received from various subsystems (for example, the traveling system 102, the sensor system 104, and the control system 106) and from the user interface 116. For example, the computer system 112 may utilize the input from the control system 106, and control the steering system 132 to avoid an obstacle detected by the sensor system 104 and the obstacle avoidance system 144. In some embodiments, the computer system 112 may be operated to control many aspects of the vehicle 100 and the subsystem of the vehicle 100.

Optionally, one or more of the foregoing components may be separately installed or associated with the vehicle 100. For example, the data storage apparatus 114 may be partially or completely separated from the vehicle 100. The foregoing components may be communicatively coupled together in a wired and/or wireless manner.

Optionally, the foregoing components are merely examples. In actual application, components in the foregoing modules may be added or deleted based on an actual requirement. FIG. 1 should not be construed as a limitation on this embodiment of this application.

A self-driving vehicle traveling on a road, for example, the foregoing vehicle 100, may recognize an object in an environment around the vehicle to determine an adjustment to a current speed. The object may be another vehicle, a traffic control device, or another type of object. In some examples, each recognized object may be considered independently, and the speed of the self-driving vehicle to be adjusted may be determined based on a respective characteristic of the object, such as a current speed and an acceleration of the object, and a spacing between the object and the vehicle.

Optionally, the vehicle 100 or a computing device associated with the vehicle 100 (for example, the computer system 112, the computer vision system 140, or the data storage apparatus 114 in FIG. 1) may predict a behavior of the recognized object based on the characteristic of the recognized object and a status of the environment (for example, traffic, rain, ice on road, and the like). Optionally, each recognized object depends on a behavior of another. Therefore, all recognized objects may be further considered together to predict a behavior of a single recognized object. The vehicle 100 can adjust the speed based on the predicted behavior of the recognized object. In other words, the self-driving vehicle can determine, based on the predicted behavior of the object, a stable state (for example, accelerated, decelerated, or stopped) to which the vehicle needs to be adjusted. In this process, another factor may also be considered to determine the speed of the vehicle 100, for example, a transverse location of the vehicle 100, curvature of the road, and proximity to static and dynamic objects when the vehicle 100 travels on a road.

In addition to providing an instruction to adjust the speed of the self-driving vehicle, the computing device may further provide an instruction to modify a steering angle of the vehicle 100, so that the self-driving vehicle follows a given track and/or keeps safe horizontal and vertical distances from an object near the self-driving vehicle (for example, a car in an adjacent lane of the road).

The vehicle 100 may be a car, a truck, a motorcycle, a bus, a boat, an airplane, a helicopter, a lawn mower, an entertainment vehicle, a playground vehicle, a construction device, a tram, a golf cart, a train, a trolley, or the like, which is not particularly limited in this embodiment of this application.

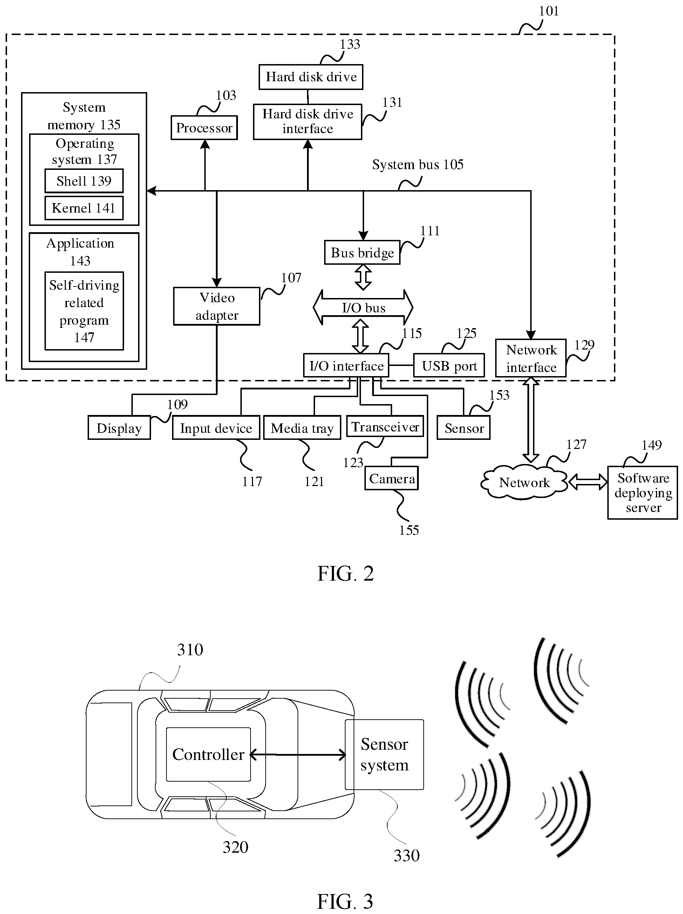

FIG. 2 is a schematic diagram of a self-driving system according to an embodiment of this application.

The self-driving system shown in FIG. 2 includes a computer system 101. The computer system 101 includes a processor 103, and the processor 103 is coupled to a system bus 105. The processor 103 may be one or a plurality of processors, and each processor may include one or more processor cores. A video adapter (video adapter) 107 may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, for example, an input device 117 (such as a keyboard, a mouse, or a touchscreen), and a media tray (media tray) 121 (such as a CD-ROM or a multimedia interface). A transceiver 123 (which may send and/or receive a radio communications signal), a camera 155 (which may capture a static or dynamic digital video image), and an external USB port 125. Optionally, an interface connected to the I/O interface 115 may be the USB port.

The processor 103 may be any conventional processor, including a reduced instruction set computer (reduced instruction set computer, RISC) processor, a complex instruction set computer (complex instruction set computer, CISC) processor, or a combination thereof. Optionally, the processor may be a dedicated apparatus such as an application specific integrated circuit (application specific integrated circuit, ASIC). Optionally, the processor 103 may be a neural network processor or a combination of the neural network processor and the foregoing conventional processor.

Optionally, in various embodiments described herein, the computer system 101 may be located far away from the self-driving vehicle (for example, the computer system 101 may be located in a cloud or a server) and may communicate with the self-driving vehicle in a wireless manner. In another aspect, some processes described herein are performed by a processor disposed in the self-driving vehicle, and other processes are performed by a remote processor, including taking actions required to perform a single operation.

The computer system 101 may communicate with a software deploying server 149 through a network interface 129. The network interface 129 is a hardware network interface, for example, a network interface card. A network 127 may be an external network, for example, Internet, or may be an internal network, for example, Ethernet or a virtual private network (virtual private network, VPN). Optionally, the network 127 may further be a wireless network, for example, a Wi-Fi network or a cellular network.

A hard disk drive interface is coupled to the system bus 105. A hardware driver interface is connected to a hard disk drive. A system memory 135 is coupled to the system bus 105. Data running in the system memory 135 may include an operating system 137 and an application 143 of the computer system 101.

The operating system includes a shell (shell) 139 and a kernel (kernel) 141. The shell is an interface between a user and the kernel (kernel) of the operating system. The shell is located on the outermost layer of the operating system. The shell manages interaction between the user and the operating system: After an input from the user, the shell interprets the input from the user to the operating system, and processes various output results of the operating system.

The kernel 141 includes parts that are in the operating system and that are used to manage a memory, a file, a peripheral device, and a system resource. Directly interacting with hardware, the kernel of the operating system usually runs processes, provides communication between the processes, and provides CPU time slice management, interruption, memory management, I/O management, and the like.

The application program 143 may also be disposed on a system of the software deploying server (deploying server) 149. In an embodiment, when the application program 143 needs to be executed, the computer system 101 may download the application program 143 from the software deploying server (deploying server) 149.

A sensor 153 is associated with the computer system 101. The sensor 153 is configured to detect an environment around the computer system 101. For example, the sensor 153 may detect an animal, a car, an obstacle, a crosswalk, and the like. The sensor may further detect an environment around an object such as the foregoing animal, car, obstacle, and crosswalk, for example, the environment around the animal, another animal that appears around the animal, a weather condition, or brightness of the surrounding environment. The sensor 153 may be further configured to obtain status information of the vehicle. For example, the sensor 153 may detect the status information of the vehicle such as a location of the vehicle, a speed of the vehicle, an acceleration of the vehicle, and a posture of the vehicle. Optionally, if the computer system 101 is located on the self-driving vehicle, the sensor may be a camera, an infrared sensor, a chemical detector, a microphone, or the like.

The technical solutions in this application may be applied to task deployment (or may also be referred to as task orchestration) of an in-vehicle sensor system of the foregoing vehicle (for example, the self-driving vehicle).

FIG. 3 is a schematic diagram of an architecture of a sensor system to which an embodiment of this application is applicable. It should be understood that an architecture 300 shown in FIG. 3 is merely an example rather than a limitation, and the architecture 300 may include more or fewer steps. This is not limited in this embodiment of this application.

As shown in FIG. 3, the architecture 300 may include a vehicle 310, a controller 320, and a sensor system 330.

The vehicle 310 may be the vehicle 100 in FIG. 1. The controller 320 may be a self-driving domain control unit (domain control unit, DCU). The controller 320 may include one or more processors, and the processor may be a high-performance multi-core processor. The sensor system 330 may include a sensor such as the positioning system 122, the inertial measurement unit 124, the radar 126, the laser rangefinder 128, or the camera 130 shown in FIG. 1. The radar 126 may be a millimeter-wave radar, a laser radar, an ultrasonic radar, or another radar. The sensor system 330 may further include another sensor. This is not limited in this embodiment of this application.

According to a multi-task deployment method in this embodiment of this application, a plurality of tasks of the sensor system 330 in FIG. 3 may be deployed on the controller 320 (for example, deployed on a plurality of processors in the controller 320), so that efficiency of multi-task deployment can be improved.

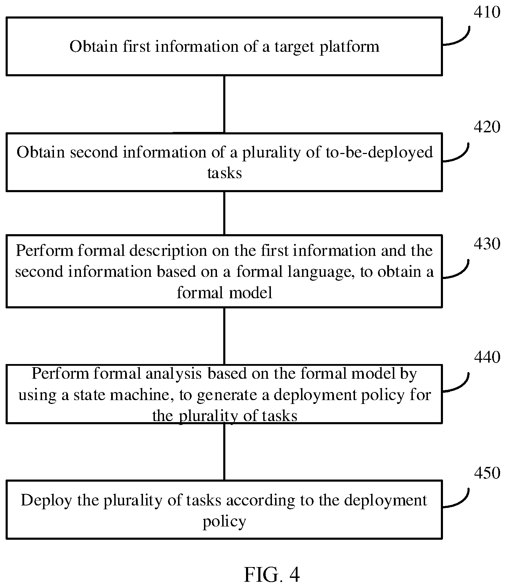

FIG. 4 is a schematic flowchart of a multi-task deployment method 400 according to an embodiment of this application.

The method 400 shown in FIG. 4 may include a step 410, a step 420, a step 430, a step 440, and a step 450. It should be understood that the method 400 shown in FIG. 4 is merely an example rather than a limitation, and the method 400 may include more or fewer steps. This is not limited in this embodiment of this application. The following separately describes these steps in detail.

The method 400 shown in FIG. 4 may be performed by the processor 113 of the vehicle 100 in FIG. 1, the method 400 may be alternatively performed by the processor 103 in the self-driving system in FIG. 2, or the method 400 may be alternatively performed by the controller 320 in FIG. 3.

S410: Obtain first information of a target platform.

The target platform may include a plurality of nodes, and the first information may be used to indicate an attribute of the target platform.

Optionally, the target platform may be an in-vehicle platform of a vehicle (for example, the vehicle may be a self-driving vehicle), and the plurality of nodes on the target platform may include a computing node (for example, a chip or a processor), a storage node (for example, a hard disk, a memory, or another storage device), a transmission node (for example, an interface or a port used for transmission), and the like.

It should be noted that the foregoing embodiment is merely an example rather than a limitation, and the target platform may further include another type of node. This is not limited in this embodiment of this application.

For example, the target platform may be a system on a chip (system on a chip, SoC) of the self-driving vehicle.

Optionally, the target platform may be configured to deploy a sensor platform of the vehicle, or deploy the sensor platform of the vehicle on the target platform.

Further, the first information may include information indicating a quantity of the nodes on the target platform, a type of each of the plurality of nodes, a capability of each node, a power consumption mode of the target platform, and a trigger condition for each power consumption mode.

For example, the first information may be used to indicate that the quantity of the nodes on the target platform is 10, and the 10 nodes include four computing nodes (for example, a chip 1, a chip 2, a chip 3, and a chip 4), four storage nodes (for example, a hard disk 1, a hard disk 2, a hard disk 3, and a hard disk 4), and two transmission nodes (for example, an I/O interface 1 and an I/O interface 2).

S420: Obtain second information of a plurality of to-be-deployed tasks.

The second information indicates a requirement for the plurality of tasks.

The plurality of tasks may be tasks obtained after running of each sensor in the sensor system of the vehicle.

The sensor system may include a plurality of sensors. For example, the sensor system may include a global positioning system, an inertial measurement unit, a millimeter-wave radar, a laser radar, an ultrasonic radar, a laser rangefinder, a camera, or another sensor. This is not limited in this embodiment of this application.

Further, the second information may include information indicating a quantity of the plurality of tasks, a dependency relationship between the plurality of tasks, a time constraint for each of the plurality of tasks, and a resource required for executing each task.

For example, the quantity of the plurality of tasks is 4 (for example, a task A, a task B, a task C, and a task D). The dependency relationship between the plurality of tasks may include: the task A needs to run before the task B, the task B can start to run only after running of the task A ends, and the task C and the task D need to run simultaneously. The time constraint for each of the plurality of tasks may include: the task A can start to run only after 100 milliseconds (ms) after the sensor system is initiated, and the resource required by each task may include: a computing resource required when the task A runs on each computing node, a corresponding storage resource, and a corresponding transmission resource.

The resource required by each task may be obtained in a manner of electrically running the task on the target platform.

It should be noted that capabilities of the plurality of nodes on the target platform may be different, and therefore, resources required by each task on different nodes may be different.

For example, a computing capability of the chip 1 is stronger than that of the chip 2, and computing resources required when the task A runs on the chip 1 are less than computing resources required when the task A runs on the chip 2. Correspondingly, storage resources required when the task A runs on the chip 1 may also be less than storage resources required when the task A runs on the chip 2, and transmission resources required when the task A runs on the chip 1 may also be less than transmission resources required when the task A runs on the chip 2.

Optionally, the second information may further include information indicating an execution time of each task, a period constraint for each task, a pre-dependency for each task, a mutually exclusive attribute between each and another task (in the plurality of tasks), and the like.

Alternatively, the second information may further include other information indicating the requirement for the plurality of tasks. This is not limited in this embodiment of this application.

S430: Perform formal description on the first information and the second information based on a formal language, to obtain a formal model.

The formal language (formal language) may refer to a language defined according to an accurate mathematical or machine-processable formula.

For example, the formal language may be used to perform formal description by using regular syntax, context-independent syntax, context-dependent syntax, unconstrained syntax, and the like.

Alternatively, the formal language may also be used to perform formal description in another manner (or another form). This is not limited in this embodiment of this application.

Optionally, the formal model may include the attribute of the target platform and formal description of the requirement for the plurality of tasks.

For example, the formal model may include: formal description of the computing node (for example, the chip or the processor), the storage node (for example, the hard disk, the memory, or another storage device), the transmission node (for example, the interface or the port used for transmission), and the like.

For another example, the formal model may further include: formal description of the quantity of the plurality of tasks, the dependency relationship between the plurality of tasks, the time constraint for each of the plurality of tasks, the resource required for executing each task, the execution time of each task, the period constraint for each task, the pre-dependency for each task, the mutually exclusive attribute between each and another task (in the plurality of tasks), and the like.

It should be noted that the foregoing embodiment is merely an example rather than a limitation. The formal model may further include formal description of another type of information. This is not limited in this embodiment of this application.

S440: Perform formal analysis based on the formal model by using a state machine, to generate a deployment policy for the plurality of tasks.

The state machine may include a platform state machine and a task state machine.

Optionally, the platform state machine may include the power consumption mode of the platform, a condition for switching between the power consumption modes, and a resource constraint for each power consumption mode. The platform state machine may be a finite state machine (finite state machine, FSM).

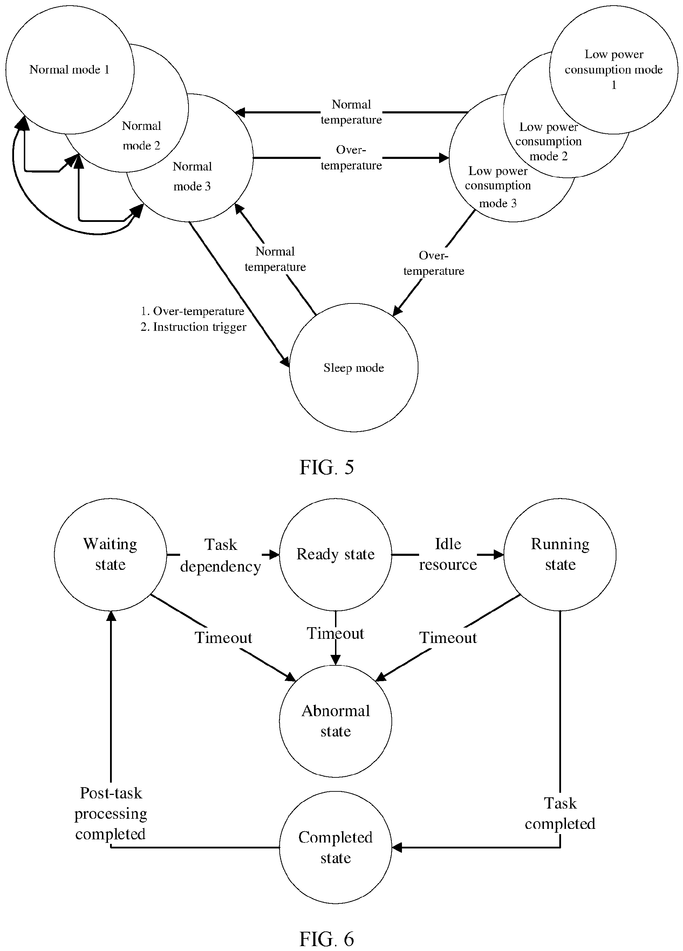

For example, as shown in FIG. 5, the power consumption mode of the platform may include a normal mode, a low power consumption mode, a sleep mode, and the like. The condition for switching between the power consumption modes may include ambient temperature, active initiation by a domain control unit, and the like. The resource constraint for each power consumption mode may include computing node sleep, computing node frequency reduction, and the like.

It should be noted that the platform state machine in FIG. 5 is merely an example rather than a limitation. The platform state machine may further include another power consumption mode, the condition for switching between the power consumption modes may further include another switching condition, and the resource constraint for each power consumption mode may also include another resource constraint. This is not limited in this embodiment of this application.

In addition, the platform state machine may further include another state or condition. A specific form of the platform state machine is not limited in this embodiment of this application.

Optionally, the task state machine may include a task state and a condition for switching between task states. The task state machine may be the finite state machine (finite state machine, FSM).

For example, as shown in FIG. 6, the task state may include a waiting state, a ready state, a running state, an abnormal state, a completed state, and the like, and the condition for switching between the tasks may include timeout, a pre-task state, a resource node state, and the like.

It should be noted that the task state machine in FIG. 6 is merely an example rather than a limitation. The task state machine may further include another task state, and the condition for switching between the tasks may further include another switching condition. This is not limited in this embodiment of this application.

In addition, the task state machine may further include another state or condition. A specific form of the task state machine is not limited in this embodiment of this application.

Optionally, the following two cases may vary depending on whether a conflict occurs in the deployment policy that is for the plurality of tasks and that is generated according to S440.

### Case 1:

Formal analysis is performed based on the formal model by using the state machine, to determine whether a conflict occurs in the deployment policy for the plurality of tasks; and the deployment policy is generated for the plurality of tasks when the conflict does not occur in the deployment policy for the plurality of tasks.

In other words, when the conflict does not occur in the deployment policy for the plurality of tasks, the deployment policy for the plurality of tasks may be directly generated.

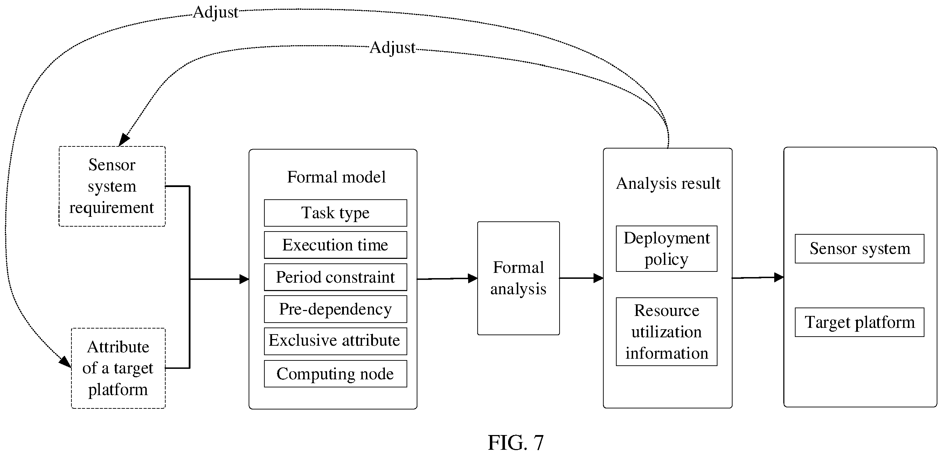

For example, as shown in FIG. 7, when the conflict does not occur in the deployment policy for the plurality of tasks, the deployment policy for the plurality of tasks may be directly generated, and the plurality of tasks are deployed according to the deployment policy.

### Case 2:

Formal analysis is performed based on the formal model by using the state machine, to determine whether a conflict occurs in the deployment policy for the plurality of tasks; conflict information of the deployment policy for the plurality of tasks is determined when the conflict occurs in the deployment policy for the plurality of tasks; and the formal model is adjusted based on the conflict information.

The conflict information may include conflicting tasks, types of conflicting tasks, a conflict occurrence moment, a conflict range, and the like.

In other words, when the conflict occurs in the deployment policy for the plurality of tasks, the conflict information of the deployment policy for the plurality of tasks may be determined, and the formal model is adjusted based on the conflict information.

Alternatively, the attribute of the target platform and/or a requirement of the sensor system (or the requirement for the plurality of tasks) may be adjusted based on the conflict information. That is, (content in) the first information or (content in) the second information is adjusted based on the conflict information.

For example, as shown in FIG. 7, when the conflict occurs in the deployment policy for the plurality of tasks, the attribute of the target platform and/or the requirement of the sensor system (or the requirement for the plurality of tasks) may be adjusted based on the conflict information.

Optionally, the performing formal analysis based on the formal model by using a state machine, to generate a deployment policy for the plurality of tasks may include:
performing formal analysis based on the formal model by using the state machine, to generate the deployment policy for the plurality of tasks and resource utilization information of the target platform.

That is, the resource utilization information of the target platform is generated when the deployment policy is generated.

Optionally, the resource utilization information may be used to indicate a resource utilization condition of the target platform.

For example, the resource utilization information may include starting and ending moments of running of each node on the target platform, resource utilization of each node, and the like. It should be noted that specific content of the resource utilization information is not limited in this embodiment of this application.

Further, the method 400 may further include a step 442.

S442: Add a task to the deployment policy based on the resource utilization information; and update the resource utilization information based on the added task.

For example, an idle node on the target platform may be determined based on the resource utilization information, formal description may be performed on the added task, the task is then added to the idle node to generate a new deployment policy, and the resource utilization information is correspondingly updated.

S450: Deploy the plurality of tasks according to the deployment policy.

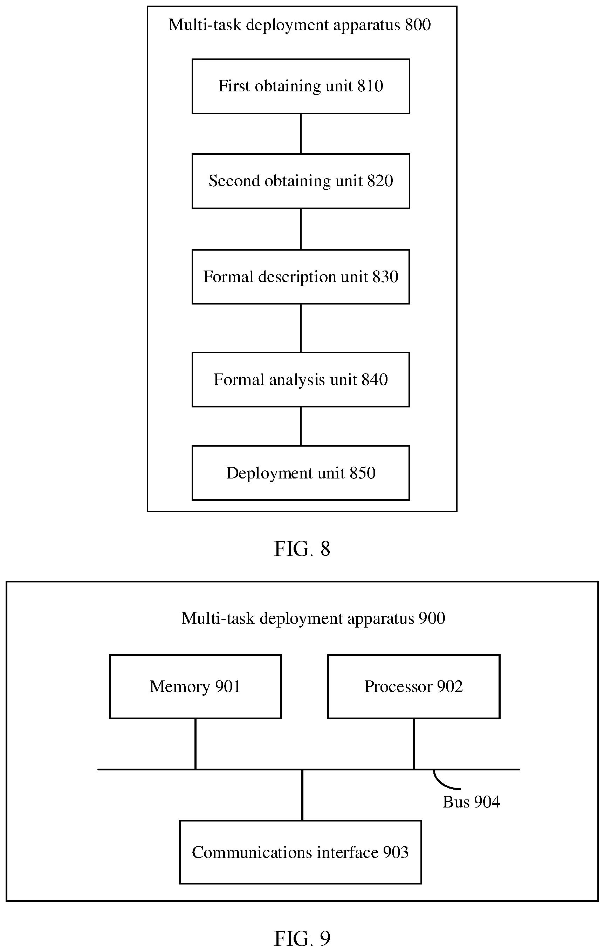

FIG. 8 is a schematic block diagram of a multi-task deployment apparatus 800 according to an embodiment of this application. It should be understood that the multi-task deployment apparatus 800 shown in FIG. 8 is merely an example, and the apparatus 800 in this embodiment of this application may further include another module or unit. It should be understood that the apparatus 800 can perform the steps in the method in FIG. 4. To avoid repetition, details are not described herein again.

In a possible implementation of this embodiment of this application, the multi-task deployment apparatus 800 may include:
a first obtaining unit 810, configured to obtain first information of a target platform, where the first information indicates an attribute of the target platform;
a second obtaining unit 820, configured to obtain second information of a plurality of to-be-deployed tasks, where the second information indicates a requirement for the plurality of tasks;
a formal description unit 830, configured to perform formal description on the first information and the second information based on a formal language, to obtain a formal model;
a formal analysis unit 840, configured to perform formal analysis based on the formal model by using a state machine, to generate a deployment policy for the plurality of tasks; and
a deployment unit 850, configured to deploy the plurality of tasks according to the deployment policy.

Optionally, the target platform includes a plurality of nodes, the first information includes information indicating a quantity of the nodes on the target platform, a type of each of the plurality of nodes, a capability of each node, a power consumption mode of the target platform, and a trigger condition for each power consumption mode, and the second information includes information indicating a quantity of the plurality of tasks, a dependency relationship between the plurality of tasks, a time constraint for each of the plurality of tasks, and a resource required for executing each task.

Optionally, the formal analysis unit 840 is specifically configured to: perform formal analysis based on the formal model by using the state machine, to determine whether a conflict occurs in the deployment policy for the plurality of tasks; and generate the deployment policy for the plurality of tasks when the conflict does not occur in the deployment policy for the plurality of tasks.

Optionally, the formal analysis unit 840 is specifically configured to: perform formal analysis based on the formal model by using the state machine, to determine whether a conflict occurs in the deployment policy for the plurality of tasks; determine conflict information of the deployment policy for the plurality of tasks when the conflict occurs in the deployment policy for the plurality of tasks; and adjust the formal model based on the conflict information.

Optionally, the formal analysis unit 840 is specifically configured to: perform formal analysis based on the formal model by using the state machine, to generate the deployment policy for the plurality of tasks and resource utilization information of the target platform.

Optionally, the apparatus further includes an updating unit 860, configured to: add a task to the deployment policy based on the resource utilization information; and update the resource utilization information based on the added task.

Optionally, the state machine includes a platform state machine and a task state machine, the platform state machine includes the power consumption mode of the platform, a condition for switching between the power consumption modes, and a resource constraint for each power consumption mode, and the task state machine includes a task state and a condition for switching between task states.

It should be understood that the multi-task deployment apparatus 800 herein is embodied in a form of a functional module. The term "module" herein may be implemented in a form of software and/or hardware. This is not specifically limited. For example, the "module" may be a software program, a hardware circuit, or a combination thereof that implements the foregoing functions. The hardware circuit may refer to an application specific integrated circuit (application specific integrated circuit, ASIC), an electronic circuit, a processor (for example, a shared processor, a dedicated processor, or a group processor) and a memory configured to execute one or more software or firmware programs, a merged logic circuit, and/or another appropriate component that supports the described function.

In an example, the multi-task deployment apparatus 800 provided in this embodiment of this application may be an in-vehicle infotainment (or a processor) of a self-driving system, or may be a controller (for example, a domain control unit) of the self-driving vehicle, or may be a chip configured in the in-vehicle infotainment, to perform the method in embodiments of this application.

FIG. 9 is a schematic block diagram of a multi-task deployment apparatus 900 according to an embodiment of this application. The apparatus 900 shown in FIG. 9 includes a memory 901, a processor 902, a communications interface 903, and a bus 904. Mutual communication connection between the memory 901, the processor 902, and the communications interface 903 is implemented by using the bus 904.

The memory 901 may be a read-only memory (read-only memory, ROM), a static storage device, a dynamic storage device, or a random access memory (random access memory, RAM). The memory 901 may store a program. When the program stored in the memory 901 is executed by the processor 902, the processor 902 is configured to perform steps of the multi-task deployment method in this embodiment of this application, for example, may be configured to perform the steps in this embodiment shown in FIG. 4.

The processor 902 may be a general-purpose central processing unit (central processing unit, CPU), a microprocessor, an application specific integrated circuit (application specific integrated circuit, ASIC), or one or more integrated circuits, configured to execute a related program, to implement the multi-task deployment method in the method embodiments of this application.

The processor 902 may further be an integrated circuit chip with a signal processing capability. In an implementation process, the steps of the multi-task deployment method in this embodiment of this application may be implemented by using an integrated logic circuit of hardware in the processor 902 or by using instructions in a form of software.

The foregoing processor 902 may further be a general purpose processor, a digital signal processor (digital signal processor, DSP), an application specific integrated circuit (ASIC), a field programmable gate array (field programmable gate array, FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 901. The processor 902 reads information in the memory 901, and completes, in combination with hardware of the processor 902, functions that need to be performed by a unit included in the multi-task deployment apparatus in embodiments of this application, or performs the multi-task deployment method in the method embodiments of this application, for example, may perform the steps/functions in the embodiment shown in FIG. 4.

The communications interface 903 may use, but is not limited to, a transceiver apparatus such as a transceiver, to implement communication between the apparatus 900 and another device or a communications network.

The bus 904 may include a path for transmitting information between components (for example, the memory 901, the processor 902, and the communications interface 903) of the apparatus 900.

It should be understood that the apparatus 900 shown in this embodiment of this application may be an in-vehicle infotainment (or a processor) of a self-driving system, or may be a controller (for example, a domain control unit) of a self-driving vehicle, or may be a chip configured in the in-vehicle infotainment, to perform the method in this embodiment of this application.

It should be understood that, the processor in embodiments of this application may be a central processing unit (central processing unit, CPU), or may be another general purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memory, RAM) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects, but may also indicate an "and/or" relationship. For details, refer to the foregoing and subsequent descriptions for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-task deployment method, comprising:
obtaining first information of a target platform, wherein the first information indicates an attribute of the target platform;
obtaining second information of a plurality of to-be-deployed tasks, wherein the second information indicates a requirement for the plurality of tasks;
performing formal description on the first information and the second information based on a formal language, to obtain a formal model;
performing formal analysis based on the formal model by using a state machine, to generate a deployment policy for the plurality of tasks; and
deploying the plurality of tasks according to the deployment policy.

2. The method according to claim 1, wherein the target platform comprises a plurality of nodes, the first information comprises information indicating a quantity of the nodes on the target platform, a type of each of the plurality of nodes, a capability of each node, a power consumption mode of the target platform, and a trigger condition for each power consumption mode, and the second information comprises information indicating a quantity of the plurality of tasks, a dependency relationship between the plurality of tasks, a time constraint for each of the plurality of tasks, and a resource required for executing each task.

3. The method according to claim 1 or 2, wherein the performing formal analysis based on the formal model by using a state machine, to generate a deployment policy for the plurality of tasks comprises:
performing formal analysis based on the formal model by using the state machine, to determine whether a conflict occurs in the deployment policy for the plurality of tasks; and
generating the deployment policy for the plurality of tasks when the conflict does not occur in the deployment policy for the plurality of tasks.

4. The method according to claim 1 or 2, wherein the performing formal analysis based on the formal model by using a state machine, to generate a deployment policy for the plurality of tasks comprises:
performing formal analysis based on the formal model by using the state machine, to determine whether a conflict occurs in the deployment policy for the plurality of tasks;
determining conflict information of the deployment policy for the plurality of tasks when the conflict occurs in the deployment policy for the plurality of tasks; and
adjusting the formal model based on the conflict information.

5. The method according to any one of claims 1 to 4, wherein the performing formal analysis based on the formal model by using a state machine, to generate a deployment policy for the plurality of tasks comprises:
performing formal analysis based on the formal model by using the state machine, to generate the deployment policy for the plurality of tasks and resource utilization information of the target platform.

6. The method according to claim 5, wherein the method further comprises:
adding a task to the deployment policy based on the resource utilization information; and
updating the resource utilization information based on the added task.

7. The method according to any one of claims 1 to 6, wherein the state machine comprises a platform state machine and a task state machine, the platform state machine comprises the power consumption mode of the platform, a condition for switching between the power consumption modes, and a resource constraint for each power consumption mode, and the task state machine comprises a task state and a condition for switching between task states.

8. A multi-task deployment apparatus, comprising:
a first obtaining unit, configured to obtain first information of a target platform, wherein the first information indicates an attribute of the target platform;
a second obtaining unit, configured to obtain second information of a plurality of to-be-deployed tasks, wherein the second information indicates a requirement for the plurality of tasks;
a formal description unit, configured to perform formal description on the first information and the second information based on a formal language, to obtain a formal model;
a formal analysis unit, configured to perform formal analysis based on the formal model by using a state machine, to generate a deployment policy for the plurality of tasks; and
a deployment unit, configured to deploy the plurality of tasks according to the deployment policy.

9. The apparatus according to claim 8, wherein the target platform comprises a plurality of nodes, the first information comprises information indicating a quantity of the nodes on the target platform, a type of each of the plurality of nodes, a capability of each node, a power consumption mode of the target platform, and a trigger condition for each power consumption mode, and the second information comprises information indicating a quantity of the plurality of tasks, a dependency relationship between the plurality of tasks, a time constraint for each of the plurality of tasks, and a resource required for executing each task.

10. The apparatus according to claim 8 or 9, wherein the formal analysis unit is specifically configured to:
perform formal analysis based on the formal model by using the state machine, to determine whether a conflict occurs in the deployment policy for the plurality of tasks; and
generate the deployment policy for the plurality of tasks when the conflict does not occur in the deployment policy for the plurality of tasks.

11. The apparatus according to claim 8 or 9, wherein the formal analysis unit is specifically configured to:
perform formal analysis based on the formal model by using the state machine, to determine whether a conflict occurs in the deployment policy for the plurality of tasks;
determine conflict information of the deployment policy for the plurality of tasks when the conflict occurs in the deployment policy for the plurality of tasks; and
adjust the formal model based on the conflict information.

12. The apparatus according to any one of claims 8 to 11, wherein the formal analysis unit is specifically configured to:
perform formal analysis based on the formal model by using the state machine, to generate the deployment policy for the plurality of tasks and resource utilization information of the target platform.

13. The apparatus of claim 12, wherein the apparatus further comprises an updating unit, configured to:
add a task to the deployment policy based on the resource utilization information; and
update the resource utilization information based on the added task.

14. The apparatus according to any one of claims 8 to 13, wherein the state machine comprises a platform state machine and a task state machine, the platform state machine comprises the power consumption mode of the platform, a condition for switching between the power consumption modes, and a resource constraint for each power consumption mode, and the task state machine comprises a task state and a condition for switching between task states.

15. A multi-task deployment apparatus, comprising a processor and a memory, wherein the memory is configured to store program instructions, and the processor is configured to invoke the program instructions to perform the method according to any one of claims 1 to 7.

16. A computer-readable storage medium, wherein the computer-readable storage medium stores program instructions, and when the program instructions are run by a processor, the method according to any one of claims 1 to 7 is implemented.

17. A chip, wherein the chip comprises a processor and a data interface, and the processor reads, through the data interface, instructions stored in a memory, to perform the method according to any one of claims 1 to 7.
